# EUROPÄISCHE PATENTSCHRIFT

(11) **EP 1 364 847 B1**
(45) Veröffentlichungstag und Bekanntmachung des Hinweises auf die Patenterteilung: **20.08.2008**
(21) Anmeldenummer: 03010531.6
(22) Anmeldetag: 10.05.2003
(51) Int. Cl.: B60S 3/00, B60S 5/00

(54) **Behandlungsstation für Fahrzeugbehandlungsanlagen**
Treating station for vehicle treatment system
Poste de traitement pour installations de traitement de véhicules

(30) Priorität: 23.05.2002 DE 20208029 U
(43) Veröffentlichungstag der Anmeldung: 26.11.2003
(73) Patentinhaber: Otto Christ AG, 87734 Benningen (DE)
(72) Erfinder: Christ, Franz, 87734 Memmingen (DE)
(74) Vertreter: Ernicke, Hans-Dieter

(56) Entgegenhaltungen:
- DE-A- 10 134 358
- DE-A- 19 534 145
- DE-U- 29 718 440
- DE-U- 29 918 528

## Beschreibung

Die Erfindung betrifft eine Behandlungsstation für Fahrzeugbehandlungsanlagen, insbesondere Autowaschanlagen, mit den Merkmalen im Oberbegriff des Hauptanspruchs.

Derartige Behandlungsstationen können zum Beispiel kombinierte Wasch-Spül-und-Trockenportale in Portalwaschanlagen oder Einzelportale in Autowaschstraßen sein. Diese Behandlungsstationen haben ein Gehäuse, vorzugsweise in Form eines Portals, welche eine Wandverkleidung aufweist. Üblicherweise bestehen die Wandverkleidungen aus Kunststoff in Platten- oder Schalenform und sind häufig in den Hausfarben des Anlagenbetreibers, zum Beispiel in den Farben eines Mineralölkonzerns, lackiert. Die Behandlungsstationen stehen in meist wenig beleuchteten Hallen und lassen sich optisch nicht gut wahrnehmen.

Aus der DE 101 34 358 ist es bekannt, an der zur Einfahrseite und zum Fahrzeug weisenden Front eines Waschportals selbst leuchtende Hinweisschilder mit Symbolen anzuordnen, welche die gewählten bzw. gerade in Betrieb befindlichen Waschfunktionen signalisieren. Diese Hinweisschilder bedecken die Wandverkleidung oder können in diese eingelassen sein. Die selbst leuchtenden Hinweisschilder sind als Elektrolumineszenzfolien ausgebildet. Aus der Praxis ist es andererseits auch bekannt, derartige Hinweisschilder als Leuchtkästen, Leuchtschriftanzeigen oder dergleichen auszubilden. Sie dienen ausschließlich Hinweis- und Signalisierungszwecken und vermitteln dem Fahrzeuglenker und Anlagenkunden eine bestimmte Information.

Aus der DE 299 18 528 U1 ist eine Fahrzeug-Waschanlage bekannt, bei der Audiokomponenten und Lichtquellen an der Decke des Waschraums neben der Fahrzeug-Waschanlage montiert sind, die den Waschraum beschallen und beleuchten. Am Brückenteil des Waschportals ist zu Informationszwecken ein Displayfeld für eine Laufschrift angeordnet.

Die DE 297 18 440 U1 zeigt eine Behandlungsstation in einer Autowaschanlage mit einem Portal und einer Behandlungseinrichtung, die hier als höhenverstellbare Dachtrockendüse ausgebildet ist. Das Portal oder Gehäuse weist auch eine Wandverkleidung auf. Eine Signaleinrichtung in Form von verschieden farbigen Leuchten, Richtungspfeilen, Schriftfeldern oder anderen optischen Anzeigen ist in der Portalöffnung unter dem Querträger angeordnet und auf dem Korpus einer höhenverstellbaren Dachtrockendüse montiert.

Die DE 195 34 145 A1 befasst sich mit einer Vorrichtung zur Inspektion spiegelnder und halbspiegelnder Oberflächen eines Fahrzeugs mit einem Beleuchtungskanal und dient der Lackkontrolle. Die Lackierung der Karosserie erfolgt an anderer Stelle und außerhalb der Inspektionsvorrichtung. Die Inspektionsvorrichtung ist Bestandteil einer automatischen Produktionslinie von Fahrzeugkarosserien.

Es ist Aufgabe der vorliegenden Erfindung, die Erscheinungsform von Behandlungsstationen zu verbessern.

Die Erfindung löst diese Aufgabe mit dem Merkmalen im Hauptanspruch.
Die aktive Leuchtfähigkeit der Wandverkleidung lässt das Gehäuse und die gesamte Behandlungsstation auch bei ungünstigen Lichtverhältnissen in Waschhallen oder dergleichen wesentlich deutlicher und klarer hervortreten.

Die Behandlungsstationen, und insbesondere Waschportale oder dergleichen werden optisch viel besser und stärker von den vorbeifahrenden Verkehrsteilnehmern wahrgenommen. Der Werbe- und Anreizeffekt der Behandlungsstationen wird hierdurch deutlich gesteigert.

Besondere Vorteile ergeben sich in Verbindung mit farblichen Präsentationen. Ein in den Hausfarben des Anlagenbetreibers aktiv und vorzugsweise möglichst großflächig leuchtendes Gehäuse bzw. Portal einer Autowaschanlage oder dergleichen trägt zur Gesamtpräsentation des Umfelds, zum Beispiel einer Tankstelle oder dergleichen bei. Die Corporate Identity wird positiv und stärker hervorgehoben.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine Behandlungsstation mit einer aktiv leuchtfähigen Wandverkleidung in Stirnansicht,
- Figur 2:: die Behandlungsstation von Figur 1 in Seitenansicht,
- Figur 3:: eine Variante der Behandlungsstation in Stirnansicht,
- Figur 4:: die Behandlungsstation von Figur 3 in Seitenansicht und

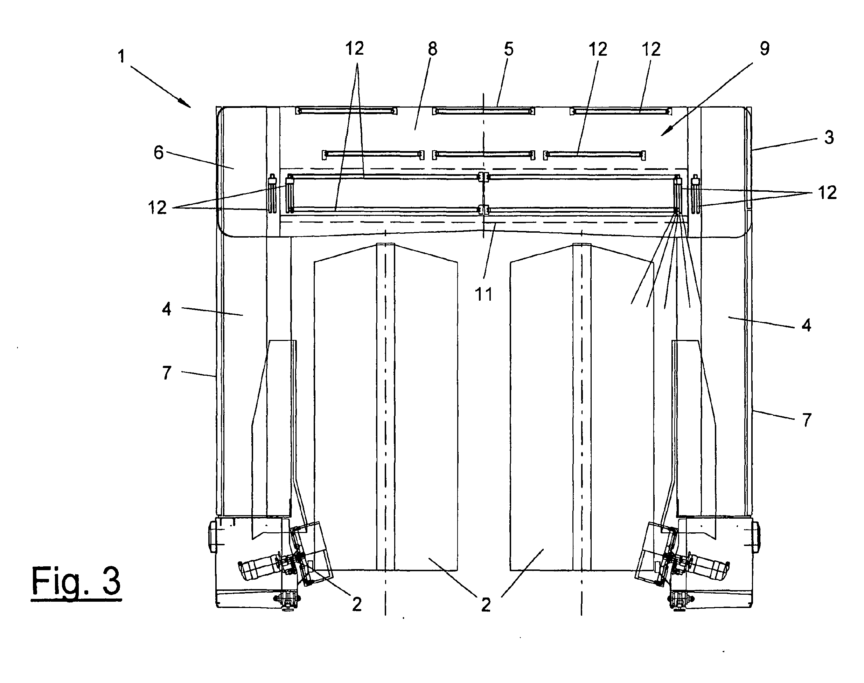

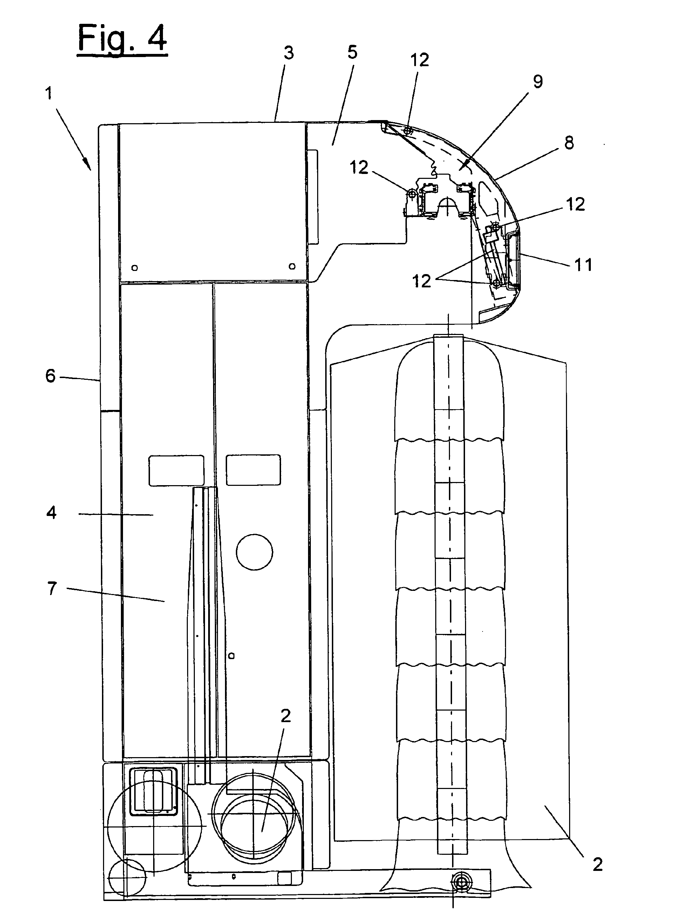

- Figur 4:: die Behandlungsstation von Figur 3 in Draufsicht.

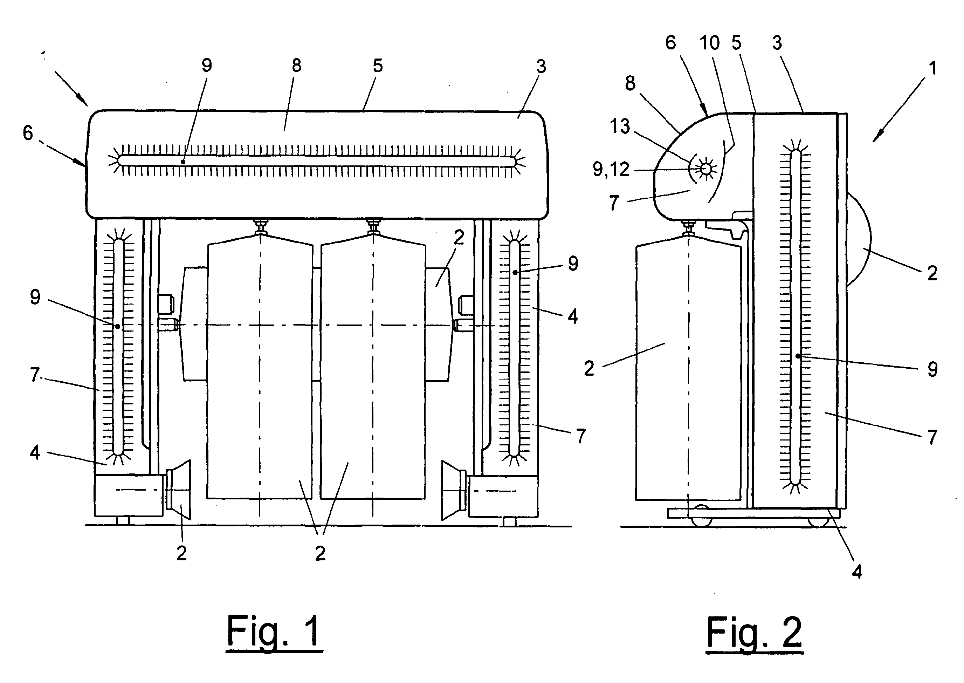

In Figur 1 bis 4 ist eine Behandlungsstation (1) einer hier nicht weiter dargestellten Fahrzeugbehandlungsanlage gezeigt. Bei der Fahrzeugbehandlungsanlage kann es sich zum Beispiel um eine Autowaschanlage in beliebiger Ausführung, insbesondere Portalwaschanlage, Taktanlage oder Autowaschstraße handeln. Alternativ kann es auch eine Polieranlage oder dgl. sein.

Die Behandlungsstation (1) ist in der gezeigten Ausführungsform als Waschstation ausgebildet, die ein oder mehrere geeignete Behandlungseinrichtungen (2), zum Beispiel die in den Zeichnungen angedeuteten horizontalen und vertikalen Waschbürsten aufweist. Alternativ kann die Behandlungsstation eine Polierstation sein, eine Trocknungsstation, eine Spülstation oder dergleichen. Bei einer Portalwaschanlage sind zum Beispiel ein oder zwei bewegliche Behandlungsstationen (1) vorhanden, die mehrere unterschiedliche Funktionen ausführen, zum Beispiel Hochdruckvorwäsche, Bürstenwäsche, Auftrag von Reinigungsmitteln, Spülen, Trocknen, Wachsen etc. Bei einer Autowaschstraße können mehrere der gezeigten Behandlungsstationen (1) hintereinander angeordnet sein, wobei üblicherweise in den einzelnen Stationen nur einzelne der vorgenannten Funktionen durchgeführt werden.

Die Behandlungsstation (1) besitzt mindestens ein Gehäuse (3), welches z.B. als übliches stationäres oder fahrbares Portal oder in anderer beliebig geeigneter Weise ausgebildet ist. In diesem Gehäuse sind die verschiedenen Maschinenkomponenten für die Behandlungseinrichtung (2) untergebracht. Das Portal (3) besteht üblicherweise aus zwei vertikalen, seitlich distanzierten .Ständern (4) und einem verbindenden Querteil oder Joch (5).

Das Gehäuse (3) besitzt eine Wandverkleidung (6). Diese kann zum Beispiel je nach Formgebung des Gehäuses oder Portals (3) aus mehreren Seitenverkleidungen (7) und Frontverkleidungen (8) an Ständern (4) und Querteil (5) bestehen.

Das Gehäuse (3) besitzt eine zumindest bereichsweise aktiv leuchtfähige Wandverkleidung (6). Hierbei können alle von außen sichtbaren Seiten- und Frontverkleidungen (7,8) aktiv leuchtfähig sein. Dies sind insbesondere die auf Augenhöhe eines stehenden oder im Fahrzeug sitzenden Betrachters sichtbaren Verkleidungsbereiche. Die Leuchtfähigkeit kann alternativ nur an Bereichen und dabei gegebenenfalls auch nur an der von außen durch den Halleneingang sichtbaren Seite vorhanden sein. Ferner können die Frontverkleidungen (8) nur des Querteils (5) oder beider Ständer (4) und des Querteils (5) an Vorderund/oder Rückseite des Gehäuses (3) aktiv leuchtfähig sein. Diese Leuchtfähigkeit kann alternativ oder zusätzlich auch an den Seitenverkleidungen (7) von Ständern (4) und/oder Querteil (5) vorhanden sein, insbesondere wenn die Waschstation (1) in einer Halle mit einer verglasten Seitenwand steht und somit von außen seitlich sichtbar ist. In diesem Fall kann auf die Leuchtfähigkeit im Bereich der Frontverkleidungen (8) gegebenenfalls verzichtet werden. Darüber hinaus gibt es auch noch beliebige andere Variationsmöglichkeiten.

Die aktive Leuchtfähigkeit der Wandverkleidung (6) bzw. ihrer Teile (7,8) kann auf unterschiedliche Weise erzielt werden. In der bevorzugten Ausführungsform sind im Gehäuse (3) ein oder mehrere Beleuchtungseinrichtungen (9) angeordnet, die Licht nach außen strahlen, wobei die Wandverkleidung (6) bzw. deren Teile (7,8) zumindest bereichsweise lichtdurchlässig ist. Die Wandverkleidung (6) wird somit von innen her beleuchtet. Die leuchtfähigen Bereiche der Wandverkleidung (6) bestehen hierbei aus einem geeigneten lichtdurchlässigen und gegebenenfalls farbgebenden Material. Im bevorzugten Ausführungsbeispiel bestehen die betroffenen Bereiche der Wandverkleidung (6) aus einem eingefärbten transparenten Kunststoff. Alternativ können sie auch aus einem farblosen transparenten Kunststoff bestehen, der mit einer tranzluzenten Beschichtung, z.B. einer Lackierung, versehen ist. Die betroffenen Bereiche der Wandverkleidung (6) leuchten damit aktiv nach außen und strahlen in der jeweils gewünschten Farbgebung unabhängig von dem vorhandenen Umgebungslicht und insbesondere der Hallenbeleuchtung.

Die Beleuchtungseinrichtung (9) kann unterschiedlich ausgebildet sein. Sie kann zum Beispiel aus ein oder mehreren geeigneten Leuchtkörpern (12), z.B. Leuchtstoffröhren, alternativ auch Glühbirnen, Leuchtdioden oder dgl. bestehen, die in der Nähe der aktiv leuchtfähigen Bereiche der Wandverkleidung (6) angeordnet sind und diese direkt oder indirekt bestrahlen. Zur Verstärkung der Leuchtkraft oder zur Streuung des Lichts können hinter den Leuchtkörpern (12) ein oder mehrere ggf. gewölbte Spiegel (10) vorhanden sein, mit denen sich die Lichtführung auch lenken lässt. Zur Erzielung einer indirekten Beleuchtung können Blenden (13) in Sichtrichtung vor den Leuchtkörpern (12) angeordnet sein.

Die Leuchtstoffröhren (12) sind zum Beispiel wie in Figur 1 und 2 gezeigt längs der Ständer (4) und/oder des Querteils (5) angeordnet. Hierbei können auch mehrere Leuchtstoffröhren hintereinander oder parallel nebeneinander angeordnet sein.

Ein Spiegel (10) ist in Figur 2 dargestellt. Er besitzt eine zur Sicht- bzw. Frontseite konkav gewölbte Form mit einer innenseitigen Verspiegelung und dient so als lichtverstärkender Rückenspiegel. Figur 2 zeigt auch eine frontseitige Blende (13).

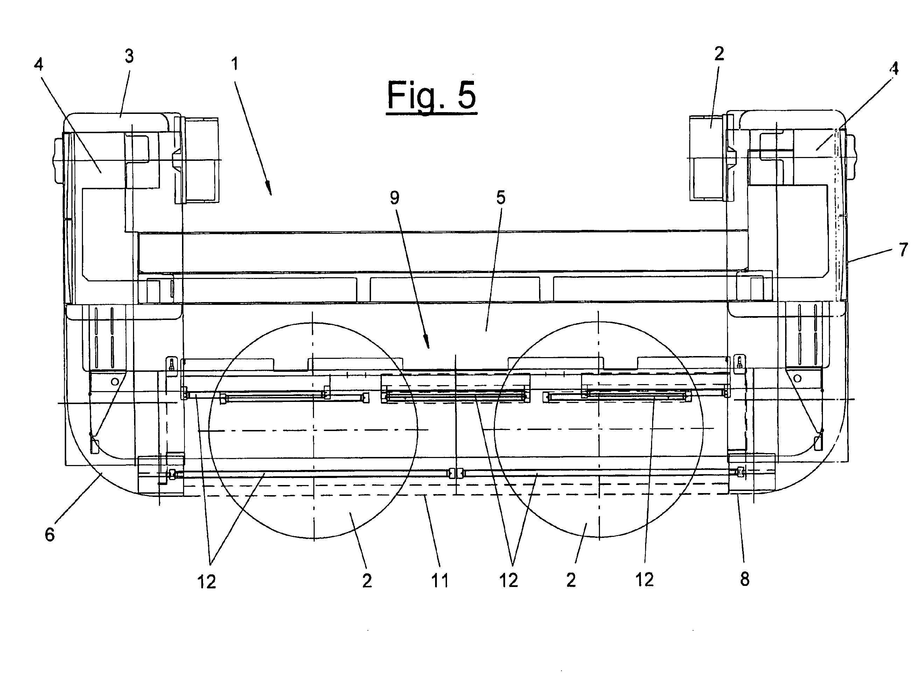

Figur 3 bis 5 zeigen eine Variante der Behandlungsstation (1), bei der nur im Bereich des Querteils (5) eine Beleuchtungseinrichtung (9) vorhanden ist. Diese besteht aus mehreren Leuchtkörpern (12), vorzugsweise Leuchtstoffröhren, die mit horizontaler und vertikaler Ausrichtung im Innenraum des Querteils (5) angeordnet sind. Horizontale Leuchtstoffröhren (12) befinden sich am oberen Ende der zum nicht dargestellten fahrzeugweisenden Frontverkleidung (8). Weitere horizontale und mehrfach in Reihe hintereinander angeordnete Leuchtstoffröhren (12) sind im mittleren und unteren Bereich des Querteils (5) angebracht. Im Bereich der Übergangsstellen zu den seitlichen Ständern (4) sind jeweils zwei vertikale Leuchtstoffröhren angeordnet, die gegebenenfalls auch durch eine Öffnung an der Unterseite des Querteils (5) frei nach unten strahlen und die Behandlungseinrichtung (2) bzw. Waschbürsten beleuchten können. In den Ständern (4) können in Abwandlung der gezeigten Ausführungsform ebenfalls Beleuchtungseinrichtungen (9) vorhanden sein.

Die Beleuchtungseinrichtung (9) kann unabhängig von der Betriebsfunktion der Behandlungsstation (1) über eine geeignete Steuerung ein- und ausgeschaltet werden. Dies kann einerseits manuell durch den Anlagenbetreiber erfolgen. Andererseits ist auch eine automatische Beschaltung möglich, die zum Beispiel mit einem Dämmerungsschalter gekoppelt ist und automatisch bei Abschwächung des Umgebungslichtes die Beleuchtungseinreichtung (9) einschaltet. Die Beleuchtungseinrichtung (9) kann während der Stillstandszeiten der Behandlungsanlage eingeschaltet bleiben. Sie kann allerdings auch in Abhängigkeit vom Anlagen- und Waschbetrieb zu- und abgeschaltet werden.

In weiterer Abwandlung kann die Beleuchtungseinrichtung (9) auch die Farbe oder die Leuchtstärke ändern, wobei sie zum Beispiel Betriebsfunktionen der Behandlungsstation (1) durch Farbgebung oder Leuchtkraft signalisieren kann. Gegebenenfalls können auch unterschiedliche Bereiche der Wandverkleidung (6) in unterschiedlichen Farben oder Leuchtstärken erscheinen. Sie können auch unabhängig voneinander in ihrer Leuchtfunktion zu- und abgeschaltet werden. Gegebenenfalls können die aktiv leuchtenden Bereiche der Wandverkleidung (6) auch blinken, einen Farbwechsel zeigen oder in sonstiger Weise ihre Leuchterscheinung verändern.

In einer weiteren Abwandlung ist es möglich, die aktiv leuchtfähigen Bereiche farblich neutral und gegebenenfalls vollkommen durchsichtig zu halten, wobei die Farbeffekte durch die Beleuchtungseinrichtung (9) in geeigneter Weise erzielt werden.

Ferner ist es möglich, die Art, Größe und Verteilung der Beleuchtungseinrichtung (9) zu variieren. Anstelle von Leuchtstoffröhren können andere Leuchtkörper, zum Beispiel Glühbirnen, Halogenstrahler oder dergleichen zum Einsatz kommen.

In weiterer Abwandlung, die nicht unter Anspruch 1 fällt, ist es möglich, die Beleuchtungseinrichtung (9) in die aktiv leuchtfähigen Bereiche der Wandverkleidung (6) zu integrieren. Dies ist zum Beispiel durch mehr oder weniger großflächig eingebaute LED's möglich. Alternativ kann die Wandverkleidung (6) in den betroffenen Bereichen noch aus einem anderen geeigneten Material bestehen, welches bei Anlegen einer elektrischen Spannung selbst leuchtet. Auch diese Ausführungsform fällt nicht unter Anspruch 1.

Unabhängig von den vorbeschriebenen aktiv leuchtfähigen Bereichen der Wandverkleidung (6) können am Gehäuse (3) andere Leuchtkörper oder auch Signalisiereinrichtungen bzw. Anzeigen (11) vorhanden sein. Dies können zum Beispiel die an sich bekannten verschiedenfarbigen Ampeln zur Signalisierung der richtigen Abstellposition für das Fahrzeug sein. Daneben gibt es auch leuchtende Schriftfelder oder Lauflichter oder sonstige Signalisiereinrichtungen an der Front des Querteils (5), die Anlagenfunktionen oder Bedienungshinweise für den Fahrzeugführer und Anlagenkunden signalisieren. Diese Leuchtkörper und Signalisiereinrichtungen (11) können von den erfindungsgemäßen aktiv leuchtfähigen Bereichen der Wandverkleidung (6) umgeben sein.

Im Ausführungsbeispiel der Figuren 3 bis 5 ist eine solche Signalisiereinrichtung (11) als Schriftfeld an der Front des Querteils (5) schematisch dargestellt.

Die Signalisierungseinrichtung (11) kann in die Frontverkleidung (8) eingelassen sein, wobei die leuchtfähige Wandverkleidung (6) in diesem Bereich ausgespart ist. Die Beleuchtungseinrichtung (9) bzw. deren Leuchtkörper (12) können die Signalisierungseinrichtung (11) umgeben, indem wie zum Beispiel in Figur 4 dargestellt horizontale Leuchtkörper (12) entlang des oberen und unteren Randes der Signalisierungseinrichtung (11) erstrecken. Die vertikalen oder schräg ausgerichteten Leuchtkörper (12) sind zumindest teilweise neben der Signalisierungseinrichtung (11) angeordnet. Die Rückseite der Signalisierungseinrichtung (11) kann in diesem Fall auch als Blendenersatz für eine indirekte Beleuchtung dienen.

Abwandlungen der gezeigten beschriebenen Ausführungsformen sind in verschiedener Weise möglich. Bei Anordnung mehrerer Behandlungsstationen (1) bzw. Gehäuse oder Portale (3) in einer Anlage, zum Beispiel einer Autowaschstraße, können nur ein Teil oder alle dieser Gehäuse (3) aktiv leuchtfähig sein. Sie können dabei in gleicher oder unterschiedlicher Leuchtform (Farben, Leuchtstärke etc.) erscheinen. Gegebenenfalls können auch die verschiedenen Gehäuse (3) funktionsbedingt leuchten, indem nur bei Durchfahrt eines Fahrzeugs die Beleuchtungseinrichtung (9) eingeschaltet ist und anschließend wieder ausgeschaltet wird. Hierdurch entsteht ein gewisser Lauflichteffekt über die Anlage, was insbesondere bei langen mehrständigen Autowaschstraßen mit voller Seitenverglasung der Halle optisch reizvoll ist und als Eyecatcher wirkt. Ferner sind Form, Funktion und Gestalt der Behandlungsstationen (1) und ihrer Gehäuse (3) beliebig abwandelbar. Gleiches gilt für die aktiv leuchtfähigen Bereiche der Wandverkleidung (6). Auch die konstruktiven Maßnahmen der Erzielung der aktiven Leuchtfähigkeit sind beliebig abwandelbar.

### BEZUGSZEICHENLISTE

- 1: Behandlungsstation, Waschstation
- 2: Behandlungseinrichtung, Waschbürsten
- 3: Gehäuse, Portal
- 4: Ständer
- 5: Querteil
- 6: Wandverkleidung
- 7: Seitenverkleidung
- 8: Frontverkleidung
- 9: Beleuchtungseinrichtung
- 10: Spiegel
- 11: Signalisiereinrichtung
- 12: Leuchtkörper, Leuchtstoffröhre
- 13: Blende

## Patentansprüche

1. Behandlungsstation in Autowasch- oder Polieranlagen, mit mindestens einem Gehäuse (3), vorzugsweise einem Portal, und mit mindestens einer Behandlungseinrichtung (2), wobei das Gehäuse (3) eine platten- oder schalenförmige Wandverkleidung (6) aufweist, **dadurch gekennzeichnet, dass** im Gehäuse (3) ein oder mehrere Beleuchtungseinrichtungen (9) angeordnet sind, die Licht nach außen strahlen, wobei seine Wandverkleidung (6) zumindest bereichsweise lichtdurchlässig ist; und damit aktiv nach außen leuchtet.

2. Behandlungsstation nach Anspruch 1, **dadurch gekennzeichnet, dass** die Wandverkleidung (6) aktiv leuchtfähige Seiten- und Frontverkleidungen (7,8) aufweist.

3. Behandlungsstation nach Anspruch 1 oder 2, **dadurch gekennzeichnet, dass** die leuchtfähigen Bereiche der Wandverkleidung (6) aus einem, eingefärbten transparenten Kunststoff bestehen.

4. Behandlungsstation nach Anspruch 1 oder 2, **dadurch gekennzeichnet, dass** die leuchtfähigen Bereiche der Wandverkleidung (6) aus einem im wesentlichen farblosen transparenten Kunststoff bestehen, der mit einer farbigen transluzenten Beschichtung, insbesondere Lackierung, versehen ist.

5. Behandlungsstation nach einem der Ansprüche 1 bis 4, **dadurch gekennzeichnet, dass** die Beleuchtungseinrichtung (9) ein oder mehrere Leuchtkörper (12), z.B. Leuchtstoffröhren, aufweist.

6. Behandlungsstation nach einem der Ansprüche 1 bis 5, **dadurch gekennzeichnet, dass** die Beleuchtungseinrichtung (9) ein oder mehrere Spiegel (10) und/oder Blenden (13) zur Lichtlenkung aufweist.

7. Behandlungsstation nach einem der Ansprüche 1 bis 6, **dadurch gekennzeichnet, dass** die Beleuchtungseinrichtung (9) eine Steuerung aufweist, die manuell oder automatisch, insbesondere durch einen Dämmerungsschalter, schaltbar ist.

8. Behandlungsstation nach einem der Ansprüche 1 bis 7, **dadurch gekennzeichnet, dass** die Beleuchtungseinrichtung (9) in der Leuchterscheinung, insbesondere der Farbe oder der Leuchtstärke veränderlich ist oder blinkt.

9. Behandlungsstation nach einem der vorhergehenden Ansprüche, **dadurch gekennzeichnet, dass** am Gehäuse (3) ein oder mehrere Signalisiereinrichtungen (11) oder Anzeigen angeordnet und von der aktiv leuchtfähigen Wandverkleidung (6) umgeben sind.

## Claims

1. Treatment station in car-washing or polishing installations, having at least one housing (3), preferably a gantry, and having at least one treatment device (2), with the housing (3) having wall cladding (6) in the form of panels or shells, **characterized in that** one or more lighting devices (9) is or are arranged in the housing (3) and emit light outwards, with its wall cladding (6) being translucent at least in places, and therefore providing active illumination to the outside.

2. Treatment station according to Claim 1, **characterized in that** the wall cladding (6) has side and front claddings (7, 8) which can actively produce light.

3. Treatment station according to Claim 1 or 2, **characterized in that** the areas of the wall cladding (6) which can produce light are composed of a single-colour transparent plastic.

4. Treatment station according to Claim 1 or 2, **characterized in that** the areas of the wall cladding (6) which can produce light are composed of an essentially colourless transparent plastic which is provided with a coloured translucent coating, in particular lacquer.

5. Treatment station according to one of Claims 1 to 4, **characterized in that** the lighting device (9) has one or more light-emitting bodies (12), for example fluorescent tubes.

6. Treatment station according to one of Claims 1 to 5, **characterized in that** the lighting device (9) has one or more mirrors (10) and/or panels (13) for the light deflection.

7. Treatment station according to one of Claims 1 to 6, **characterized in that** the lighting device (9) has a controller which can be switched manually or automatically, in particular by means of a dimming switch.

8. Treatment station according to one of Claims 1 to 7, **characterized in that** the lighting device (9) has a variable light appearance, in particular a variable colour or light intensity, or flashes.

9. Treatment station according to one of the preceding claims, **characterized in that** one or more signalling devices (11) or indications is or are arranged on the housing (3) and is or are surrounded by the wall cladding (6) which can actively emit light.

## Revendications

1. Poste de traitement dans des installations de lavage ou de polissage d'automobiles, comprenant au moins une enceinte (3), de préférence un portique, et comprenant au moins un dispositif de traitement (2), l'enceinte (3) présentant un habillage de paroi (6) en forme de plaque ou de coque, **caractérisé en ce que** l'on dispose dans l'enceinte (3) un ou plusieurs dispositifs d'éclairage (9) qui émettent de la lumière vers l'extérieur, son habillage de paroi (6) étant au moins partiellement transparent à la lumière, et éclairant ainsi activement vers l'extérieur.

2. Poste de traitement selon la revendication 1, **caractérisé en ce que** l'habillage de paroi (6) présente des habillages latéraux et frontaux (7, 8) capables d'éclairer activement.

3. Poste de traitement selon la revendication 1 ou 2, **caractérisé en ce que** les régions capables d'éclairer de l'habillage de paroi (6) se composent d'un plastique transparent coloré.

4. Poste de traitement selon la revendication 1 ou 2, **caractérisé en ce que** les régions capables d'éclairer de l'habillage de paroi (6) se composent d'un plastique essentiellement transparent sans coloration, qui est pourvu d'un revêtement coloré translucide, en particulier d'une peinture.

5. Poste de traitement selon l'une quelconque des revendications 1 à 4, **caractérisé en ce que** le dispositif d'éclairage (9) présente un ou plusieurs corps d'éclairage (12), par exemple des tubes fluorescents.

6. Poste de traitement selon l'une quelconque des revendications 1 à 5, **caractérisé en ce que** le dispositif d'éclairage (9) présente un ou plusieurs miroirs (10) et/ou des diaphragmes (13) pour diriger la lumière.

7. Poste de traitement selon l'une quelconque des revendications 1 à 6, **caractérisé en ce que** le dispositif d'éclairage (9) présente une commande qui peut être commutée manuellement ou automatiquement, en particulier par un commutateur photoélectrique.

8. Poste de traitement selon l'une quelconque des revendications 1 à 7, **caractérisé en ce que** le dispositif d'éclairage (9) peut être modifié en termes d'aspect d'éclairage, notamment de sa couleur ou de l'intensité lumineuse, ou bien clignote.

9. Poste de traitement selon l'une quelconque des revendications précédentes, **caractérisé en ce que** l'on dispose sur l'enceinte (3) un ou plusieurs dispositifs de signalisation (11) ou des affichages qui sont entourés par l'habillage de paroi (6) capable d'éclairer activement.
